# EUROPEAN PATENT SPECIFICATION

(11) **EP 4 695 801 B1**
(45) Date of publication and mention of the grant of the patent: **02.12.2026**
(21) Application number: 24724705.9
(22) Date of filing: 08.04.2024
(51) Int. Cl.: G10L 21/0208, G10L 25/30, G10L 21/0232, G10L 21/034, G06N 3/045, G06N 3/08, G10L 21/0216

(54) **METHODS AND APPARATUS FOR DEEP LEARNING-BASED SPEECH ENHANCEMENT**
VERFAHREN UND VORRICHTUNG ZUR SPRACHVERBESSERUNG AUF DER BASIS VON TIEFENLERNEN
PROCÉDÉS ET APPAREIL D'AMÉLIORATION DE LA QUALITÉ DE LA PAROLE BASÉE SUR UN APPRENTISSAGE PROFOND

(30) Priority: 11.04.2023 WO PCT/CN2023/087624
(43) Date of publication of application: 18.02.2026
(73) Proprietor: Dolby Laboratories Licensing Corporation, San Francisco, CA 94103 (US)
(72) Inventor: LI, Xu, San Francisco, California 94103 (US); LIU, Xiaoyu, Dublin, California 94568 (US); LI, Kai, San Francisco, California 94103 (US)
(74) Representative: Dolby International AB Patent Group Europe
(86) International application number: PCT/US2024/023563
(87) International publication number: WO 2024/215604

(56) References cited:
- WO-A1-2022/094293
- WO-A1-2023/278398
- XU ZIYI ET AL: "Using Separate Losses for Speech and Noise in Mask-Based Speech Enhancement", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 7519 - 7523, XP033792628, DOI: 10.1109/ICASSP40776.2020.9052968
- DACHENG YIN ET AL: "TridentSE: Guiding Speech Enhancement with 32 Global Tokens", ARXIV.ORG, CORNELL UNIVERSITY LIBRARY, 201 OLIN LIBRARY CORNELL UNIVERSITY ITHACA, NY 14853, 24 October 2022 (2022-10-24), XP091351807

## Description

### CROSS-REFERENCE TO RELATED APPLICATIONS

This application claims benefit of priority to PCT Patent Application No. PCT/CN2023/087624, filed April 11, 2023.

### TECHNICAL FIELD

The present disclosure relates to the enhancement of degraded speech signals and more particular to deep learning-based speech enhancement methods and devices.

### BACKGROUND

An audio signal may be subjected to a mix of environment caused degradation, such as noise, echo reverberation, and processing related degradation, such as compression, transcoding and further processing steps before being listened to. This may result in a reduced listening experience for a user, as the audio quality of the played audio signal is not satisfactory. For example, a telephone conference service provider may find that there are significant degradations of audio quality before the audio signal is received by the telephone conference service. For example, a mobile phone conversation may often have GSM encoded voice before being received by the telephone conference service provider.

The audio signal may thus be referred to as a degraded audio or speech signal and enhancement of such a signal may advantageously be performed to reduce noise, reverberation and codec artefacts to improve the listening experience.

When speech enhancement is integrated at an endpoint before the audio signal is presented to a user, the apparatus performing speech enhancement may have no knowledge of the type of degradations in the received speech signal. For example, the speech enhancement method may have no knowledge about a previously applied compression of the speech signal. For this reason, speech enhancement systems with fixed settings may be unsuitable for enhancing the received speech signal. To improve speech enhancement in these scenarios, speech enhancement based on neural networks has gained popularity, as the neural network can be trained with speech comprising all types of degradation, and therefore provide an improved performance of speech enhancement in situations where the actual degradation is unknown to the enhancement method.

For enhancing speech in real time, speech enhancement based on a neural network may be challenging, as quality of the enhancement and delay introduced by the enhancement may be difficult to balance.

There is thus a need for further improvements in this context. International Patent Publication No. WO 2022/094293 describes deep-learning based speech enhancement. XU et al, "Using Separate Losses for Speech and Noise in Mask-Based Speech Enhancement", IEEE ICASSP, 4 May 2020, pages 7519-7523, describes components loss for the training of neural networks for speech enhancement. Yin et al, "TridentSE: Guiding Speech Enhancement with 32 Global Tokens", ARXIV.ORG, 24 October 2022, describes an architecture for speech enhancement which is capable of capturing both global information and local details. International Patent Publication No. WO 2023/278398 describes over-suppression mitigation for deep learning based speech enhancement.

### SUMMARY

The invention is defined by the appended independent claims 1, 9 and 13-15. Preferred embodiments of the invention are set forth in the appended dependent claims 2-8 and 10-12.

It will be appreciated that apparatus features and method steps may be interchanged in many ways. In particular, the details of the disclosed method(s) can be realized by the corresponding apparatus (or system), and vice versa, as the skilled person will appreciate. Moreover, any of the above statements made with respect to the method(s) are understood to likewise apply to the corresponding apparatus (or system), and vice versa.

### BRIEF DESCRIPTION OF DRAWINGS

Example embodiments of the disclosure are explained below with reference to the accompanying drawings, wherein
**Fig. 1** schematically illustrates an example framework for training a neural network for speech enhancement according to embodiments of the disclosure,
**Fig. 2** schematically illustrates an example neural network for speech enhancement,
**Fig. 3** schematically illustrates an example neural network with an up-sample module for speech enhancement according to embodiments of the disclosure,
**Fig. 4** schematically illustrates the up-sample module according to embodiments of the disclosure,
**Fig. 5** is a flowchart illustrating an example of a process of training a neural network for speech enhancement according to embodiments of the disclosure,
**Fig. 6** schematically illustrates an example framework for using a neural network for speech enhancement according to embodiments of the disclosure,
**Fig. 7** is a flowchart illustrating an example of a process of using a neural network for speech enhancement according to embodiments of the disclosure,
**Fig. 8** schematically illustrates another example framework for training a neural network for speech enhancement according to embodiments of the disclosure,
**Fig. 9** is a flowchart illustrating another example of a process of training a neural network for speech enhancement according to embodiments of the disclosure.

### DETAILED DESCRIPTION

The Figures (Figs.) and the following description relate to preferred embodiments by way of illustration only. It should be noted that from the following discussion, alternative embodiments of the structures and methods disclosed herein will be readily recognized as viable alternatives that may be employed.

Speech enhancement targets the removal of multiple unwanted artifacts such as noise, reverberation, and compression, while preserving the original speech. Recently, deep neural networks (DNNs) have been successfully used in speech enhancement and DNN-based speech enhancement is becoming an attractive research area. A commonly used method for DNN-based speech enhancement is time-frequency masking. More specifically, the DNN-based models usually use spectrum bin features of the speech signal as input and estimate a time-frequency mask which can be applied to the spectrum bin features of the speech signal. However, for many applications operating in real-time, estimating a mask with the neural network based on the spectrum bin features may be too time consuming. For this reason, existing models have used spectrum band features instead of spectrum bin features as input for the DNN. The DNN then outputs a time-frequency mask which can be applied to the spectrum band features of the speech signal. Thereby, the model complexity of the DNN and the delay introduced by the processing of the speech signal can be greatly decreased.

A downside of this approach is a decreased performance for the speech enhancement due to the low resolution of the mask compared to the mask that includes a value for each frequency bin.

The invention aims to improve the speech enhancement, while keeping the complexity of the enhancement method low such that real-time enhancement is possible. To achieve this goal, a neural network is proposed that estimates a mask on the bin level based on band level input features. As an example for such a neural network, a band-to-bin based LensNet model is proposed to increase the resolution of the estimated masks while keeping complexity as low as that of the LensNet model described in PCT Publication No. WO 2022/094290, titled "DEEP-LEARNING BASED SPEECH ENHANCEMENT".

Further, the performance of DNN-based speech enhancement also depends on the loss function with which the DNN has been trained. Recently, a perceptually motivated loss function has been proposed in PCT Publication No. WO 2023/278398, titled "OVER-SUPRESSION MITIGATION FOR DEEP LEARNING BASED SPEECH ENHANCEMENT".

The perceptually motivated loss function however operates on the amplitude spectrum instead of the complex spectrum of the speech signal. By implementing a loss function that ignores complex features of the frequency domain, relevant information may be lost when minimizing the loss function. To also leverage the complex spectrum domain knowledge, a hybrid loss function is proposed that combines the perceptual loss function in the magnitude spectrum domain with a mean squared error (MSE) loss function in the complex spectrum domain. Thereby, a non-linear penalty for over and under suppression of degradations in the speech signal can be implemented, while still considering complex domain features.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

### Band-to-Bin based DNN for Speech Enhancement

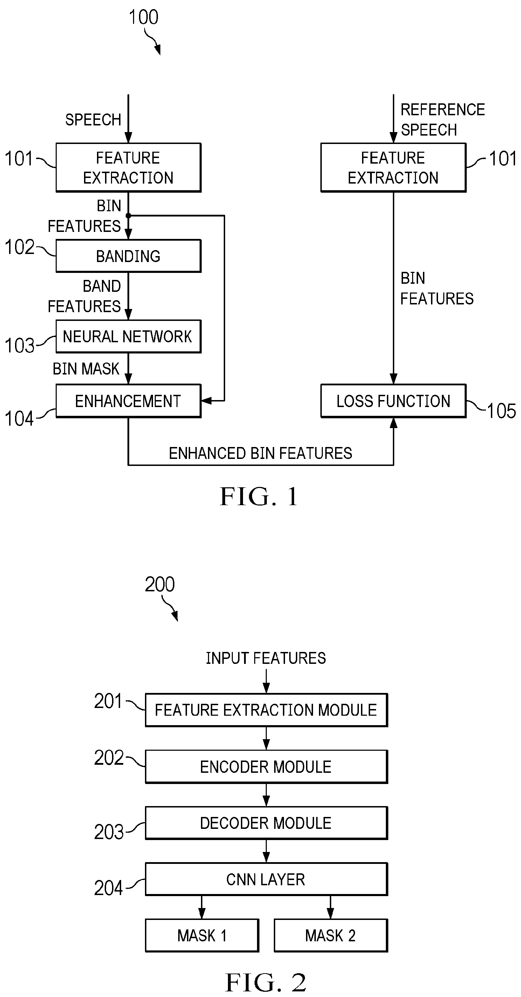

**Fig. 1** depicts an example framework 100 for training a neural network for speech enhancement according to some embodiments.

The training of the neural network is based on a pair of a clean/reference speech signal and a degraded speech signal. The degraded speech signal may be generated based on the reference speech signal. The generation of the degraded speech signal may be based on artificial degradation of the speech signal, e.g. adding a noise floor to the speech signal, or/and may be based on a real degradation due to a system transmission chain.

In case of an artificial degradation, the degraded audio speech may be generated from the clean audio speech in a degraded audio creator. The degraded audio may be part of a same device as the device for speech enhancement, or may be a device separate from the device for speech enhancement and wired or wirelessly connected to the device for speech enhancement.

The degraded audio creator may be seen as embodying a plurality of simulated transcoding chains. The degraded audio creator receives the clean speech signal and outputs one or more degraded speech signals. Advantageously, one clean speech signal may result in a plurality of clean-degraded audio speech pairs, where the input speech signal is part of each pair, and where the degraded speech signal in each pair comprises different types of artefacts.

Each simulated transcoding chain in the degraded audio creator contains a series of codecs and filters. For example, the generation of the degraded speech signal may comprise applying at least one codec (e.g. a voice codec) to the clean speech signal. The generation of the degraded speech signal may alternatively or additionally comprise applying an Intermediate Reference System, IRS, filter to the clean speech signal. The generation of the degraded speech signal may alternatively or additionally comprise applying a low pass filter to the clean speech signal.

Below follows 11 examples of transcoding chains which have been proved advantageous for training a neural network as described herein. The details of the 11 transcoding chains are:
(1) Low pass filter & IRS8 AMR-NB (5.1 ) G.71 1 VSV 1,
(2) Low pass filter & IRS8 AMR-NB (12.20) G.71 1,
(3) Low pass filter & IRS8 G.729 G.729 (delayed by 12 samples) G.71 1 VSV,
(4) Low pass filter & IRS8 dynamic range compression Opus Narrowband (6 Kbps) G.71 1 VSV,
(5) Low pass filter & IRS8 Opus Narrowband (6 kbps) AMR- NB (6.70) G.71 1 VSV,
(6) Low pass filter & IRS8 dynamic range compression AMR- NB (6.70) G.71 1 VSV,
(7) Low pass filter & IRS8 AMR-NB (5.1 ) MNRU G.71 1 VSV (MOS = 3.0),
(8) Low pass filter & IRS8 AMR-NB (5.1 ) MNRU G.71 1 VSV (MOS = 2.5),
(9) Low pass filter & IRS8 CVSD dynamic range compression AMR-NB G.71 1 (Simulating GSM mobile on Bluetooth) VSV,
(10) Low pass filter & IRS8 iLBC G.71 1 (simulating iLBC SIP truck) VSV,
(11) Low pass filter & IRS8 speex G.71 1 (simulating speex SIP truck) VSV.

The degraded speech signals outputted from the 11 transcoding chains may further be convolved with a narrow band impulse response before being used for training the neural network to simulate reverberations. The dynamic range compression may be performed by any suitable compressor, depending on the context and requirements.

For real degradation, a reference speech signal may be a signal recorded under optimal conditions, and the degraded speech signal may be the same signal, but recorded with a less capable microphone and may be processed for delivery over a network, such as a wireless network. The processing may include compression and decompression. The compression may be a lossy compression, i.e., the compression may remove content of the audio signal that cannot be regenerated by decompression.

Both the reference speech and the corresponding degraded speech are then each processed by a feature extraction module 101. They may be processed sequentially by the same feature extraction module 101 or may be processed by the same or a different feature extraction module 101 in parallel. Both speech signals may be processed on a frame-by-frame basis, i.e., the framework 100 may operate on a single frame of the input audio signals. The feature extraction module 101 may processes the input audio signal to determine a feature for each frequency bin of the input audio signal. The number of frequency bins may depend on a sampling frequency and a frame size.

To determine the features for both speech signals, the signals may have to be transformed into the frequency domain. Any suitable discrete frequency transform (Fourier transform, Wavelet transform, etc.,) may be employed. Advantageous examples comprise a short time Fourier transform, SFTF, a modified discrete cosine transform, MDCT, a shifted discrete frequency transform, MDXT, and a filter bank transform. A reason for using MDXT instead of MDCT or DFT is that it provides both the energy compaction property of the MDCT and the phase information similar to DFT.

The feature determination may comprise determining the complex spectrum value for each frequency bin.

In a next step the bin features of the degraded speech signal are processed by banding module 102. Banding module 102 groups the bin features into band features. The process of grouping the bin features may be as follows:
The spectrum may first be divided into a number of frequency bands. The frequency bands may be determined such that each band comprise a same number of bins (such as 100, 160, 200, 320, etc., bins). Alternatively, the frequency bands may each comprise a different number of bins. For example, the width and distribution of the bands may be motivated by Mel-frequency bands, Bark scale frequency bands, or log-frequency bands.

Then, for each frequency band, frequency features corresponding to the bins of the frequency band are combined into a feature corresponding to the frequency band. The feature corresponding to a band may be the power or another measure of energy of the respective band.

In some embodiments, the combining of bin features into a band feature may comprise weighting the bin features with different weights.

In a next step, the determined band features are input to a neural network. The neural network may advantageously be a DNN. The DNN may be any suitable DNN for mask-based speech enhancement that is able to upscale the relatively few number of band features to a mask with values for each frequency bin.

An example for a DNN that can be modified for this process is depicted in Fig. 2. In this figure, the structure of a LensNet 200 DNN is depicted, for which the output mask has the same dimension as the input features. The general structure of LensNet 200 will be briefly explained. The LensNet 200 model structure includes a feature extraction module 201, an encoder module 202, a decoder module 203 and a final CNN layer 204. The encoder module 202 may have one or more down sample layers and other CNN layers. The decoder module 203 may have one or more up-sample layers and other CNN layers. The output of the final CNN layer 204 may be a mask or multiple masks. The mask may have the same resolution as the input features. In other words, if the input features are the band features, the output mask may have a value corresponding to each frequency band.

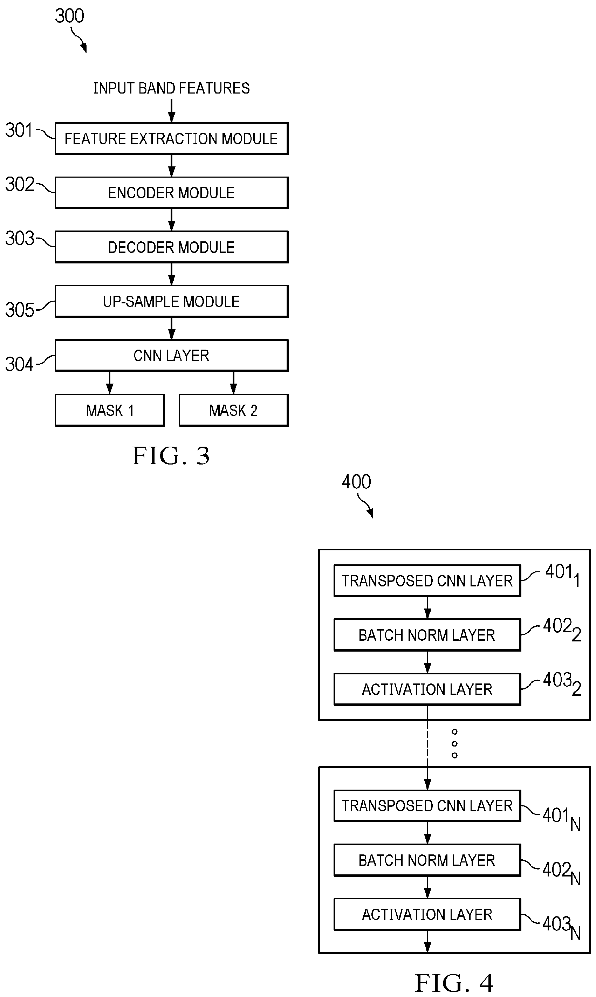

To enable LensNet to work with low resolution input features, e.g. band features, but still generate a mask with a high resolution, e.g., comprising a value corresponding to each frequency bin, an up-sample module needs to be added to LensNet. An example of LensNet 300 with an up-sample module is depicted in Fig. 3. Modules 301, 302, 303 and 304 of LensNet 300 may be identical to modules 201, 202, 203 and 204 of LensNet 200, respectively. Up-sample module 305 may be placed after decoder module 303 and before the final CNN layer 304. With the structure of LensNet 300, a mask comprising values for each frequency bin can be determined with merely band features as the input.

An example structure of an up-sample module 400 is depicted in Fig. 4. The up-sample module 400 may be the up-sample module 305. Up-sample module 400 may at least comprise a first module with transposed CNN layer 401_1, followed by a batch norm layer 402_2, followed by an activation layer 403_2. The transposed CNN layer 401_1 may alternatively be a common CNN layer with other up-sample functions. Up-sample module 400 may comprise multiple consecutive first modules n with CNN layer 401_n, batch norm layer 402_n and activation layer 403_n, wherein 1 ≤ *n* ≤ *N,* and *N* is the total number of consecutive first modules. *N* may depend on the ratio between a quantity of bins and a quantity of bands. The stride size of each transposed CNN layer 401_n in the first module may also be dependent on the ratio between the quantity of bins and the quantity of bands. For example, if the ratio is 12, i.e., each band comprises 12 bins, or the mean value of bins for each band is 12, then the number of first modules could be 2, the stride size of each transposed CNN layer 401_n could be 3 or 4, and the kernel size of the transposed CNN layer 401_n could be 6 or 8. The up-sample module 400 may estimate a bin mask based on the band mask.

Returning to **Fig. 1****,** neural network 103 outputs the bin mask, which is the input of enhancement module 104. The bin mask may include a value for each frequency bin of the speech signal with degradations. The value may be a ratio of speech to speech plus noise. In this context, noise is understood as any degradation that adversely affects the speech signal, and speech is understood as the speech signal without these degradations. The ratio may be determined by considering the power of the speech signal and the noise signal. Therefore, the value of the ratio will be 1, if there is no noise in the speech input signal, and will approach 0, when there is almost no speech, but many degradations in the input speech signal.

Additionally, a second input to enhancement module 104 are the bin features corresponding to the speech signal with degradations. The bin mask is then applied to the bin features to generate enhanced bin features. Applying the bin mask to the bin features may include the multiplication of each value of the bin mask with each corresponding bin feature. The bin feature may be the complex values of each frequency bin. The enhanced bin features may therefore also correspond to complex values of each frequency bin.

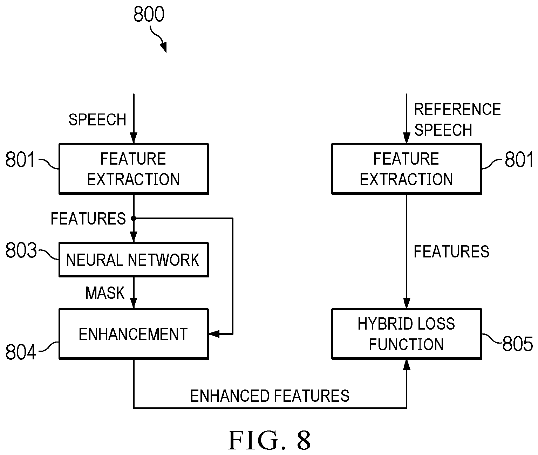

As the aim of the speech enhancement framework is an output speech signal as close as possible to the reference/clean speech signal, in a final step the enhanced bin features output by enhancement module 104, and the bin features of the reference/clean speech signal have to be compared. The comparison is performed by a loss function 105. Any suitable loss function may be used to evaluate the performance of the speech enhancement, such as the mean square error (MSE). Advantageously, a hybrid loss function may be employed to further improve the performance of the speech enhancement system. Details regarding the hybrid loss function will be explained in connection with the embodiment corresponding to **Fig. 8****.**

The result of the loss function will be evaluated. Evaluation may be performed on the result of the loss function over multiple pairs of reference/clean speech and degraded speech and over multiple frames of the respective pairs. The pairs should ideally capture a large variety of speech, e.g., gender, age etc., and a large variety of degradations for each clean speech sample. In other words, for each sample of clean speech, multiple samples of degradations of this specific speech sample may be provided.

Depending on the evaluation result, parameters of the neural network may be updated. Updating the parameters may include updating of weights in the neural network. The neural network may be trained until the result of the loss function reaches a threshold or until the result of the loss function does not decrease substantially anymore.

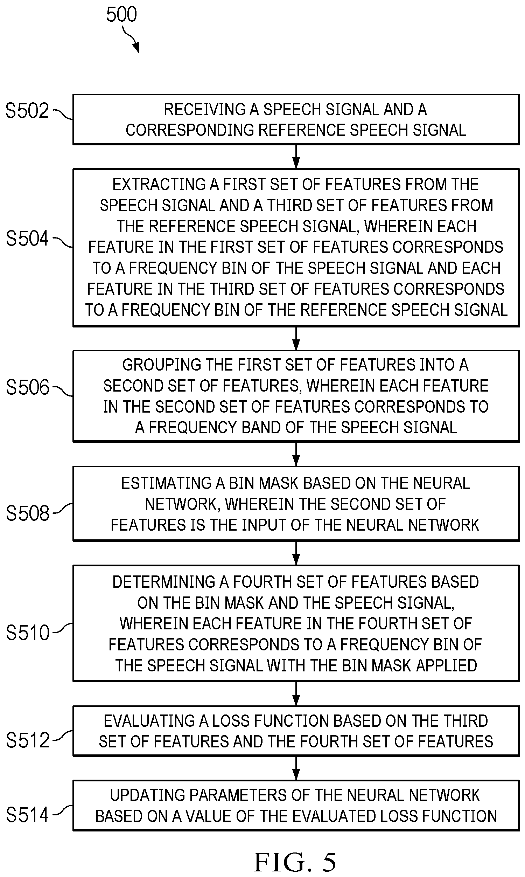

**Fig. 5** is a flowchart of an example of a process 500 of training a neural network for speech enhancement according to embodiments of the disclosure. Process 500 may correspond to the steps performed according to training of the speech enhancement framework in **Fig. 1****.** In some implementations, blocks of process 500 may be performed by a speech enhancement device. Alternatively, blocks of process 500 may be performed by another device, and the parameters for the trained neural network are provided to the speech enhancement device.

In S502, process 500 may receive a speech signal and a corresponding reference speech signal. The speech signal may be generated from the reference speech signal by degrading the speech signal.

In S504, process 500 may extract a first set of features from the speech signal and a third set of features from the reference speech signal, wherein each feature in the first set of features corresponds to a frequency bin of the speech signal and each feature in the third set of features corresponds to a frequency bin of the reference speech signal. To extract the features, the speech signal and the reference signal may have to be transformed into the frequency domain. The features in the first set of features and in the third set of features may correspond to the complex spectrum values of a corresponding frequency bin for the speech signal and the reference speech signal, respectively.

In S506, process 500 may group the first set of features into a second set of features, wherein each feature in the second set of features corresponds to a frequency band of the speech signal. Grouping the first set of features into a second set of features may correspond to calculating a value for each frequency band based on the values of the frequency bins in each band. The calculation of the frequency band value may involve calculating a mean amplitude value of the frequency bins inside of the respective frequency band.

In S508, process 500 may estimate a bin mask based on the neural network, wherein the second set of features is the input of the neural network. Estimating the bin mask may involve an estimation of a band mask, i.e., a mask comprising values for each frequency band, and an upscaling of the estimated band mask to the bin mask by the neural network.

In S510, process 500 may determine a fourth set of features based on the bin mask and the speech signal, wherein each feature in the fourth set of features corresponds to a frequency bin of the speech signal with the bin mask applied. The fourth set of features may be an enhanced version of the first set of features. Applying the bin mask to the speech signal may include multiplying each value of the bin mask with a corresponding value in the first set of features.

In S512, process 500 may evaluate a loss function based on the third set of features and the fourth set of features. The loss function may be a hybrid loss function that combines an MSE with a perceptual loss function. Evaluating the loss function may include calculating a result of the loss function over multiple frames of a speech and reference speech pair and over multiple speech and reference speech pairs.

In S514, process 500 may update parameters of the neural network based on a value of the evaluated loss function. The parameters may be weights of the neural network. The updating of the parameters may be based on preceding results of the loss function. In particular, the updating of parameters may be based on a trend of preceding results of the loss function.

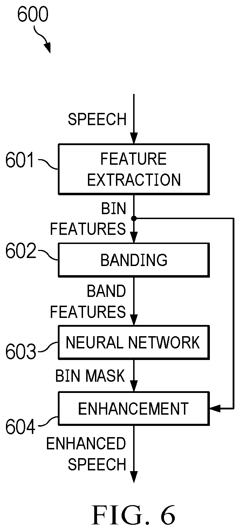

After training of the speech enhancement framework, the speech enhancement framework may be used for enhancing speech. **Fig. 6** schematically illustrates an example framework for using the neural network for speech enhancement according to embodiments of the disclosure. Certain modules in **Fig. 6** may be identical to modules in **Fig. 1****.** For a detailed explanation of these modules, it is referred to the embodiment corresponding to **Fig. 1****.**

A speech signal may be the input of feature extraction module 601. The speech signal may be degraded due to suboptimal recording devices and/or suboptimal conditions for recording the speech signal, e.g., background noise. The speech signal may further be degraded due to the transmission of the speech signal to a receiving device, e.g., the speech signal may be degraded by a lossy compression or by compression artifacts. Functionality of feature extraction module 601 may be identical to functionality of feature extraction module 101.

Extraction module 601 may output bin features of the speech signal. The bin features are grouped to band features by banding module 602. Functionality of banding module 602 may be identical to functionality of banding module 102.

The band features are input to neural network 603. Neural network 603 may have the same structure as neural network 103, i.e., it may be a DNN, and preferably structured as depicted in **Figs. 3** and **4****.** Neural network 603 may be a trained version of neural network 103, i.e., the weights of neural network 603 have been optimized for speech enhancement based on training data. The training data may be pairs of clean speech and degraded speech. Neural network 603 may output a bin mask for enhancement of the speech signal.

The bin mask and the bin features may be the input of enhancement module 604. Enhancement module 604 has the same functionality as enhancement module 104. Therefore, enhancement module 604 may output enhanced bin features. The enhanced bin features may correspond to an enhanced version of the input speech signal. To generate the enhanced speech signal, enhancement module 604 may further perform an inverse frequency transform, corresponding to the frequency transform performed in feature extraction module 601. The output of extraction module 601 may then be the enhanced speech signal in the time domain. Framework 600 may operate on a single frame of the input speech signal, or on multiple consecutive frames at the same time. The number of consecutive frames may depend on a content of the speech signal. Further, the number of consecutive frames may be chosen such that the delay introduced by the speech enhancement may not be noticeable by users of the speech enhancement system in a real-time application. The maximum delay for a real-time application may be in the range of 10 to 80 ms. The corresponding number of consecutive frames may be in the range of 2 to 4.

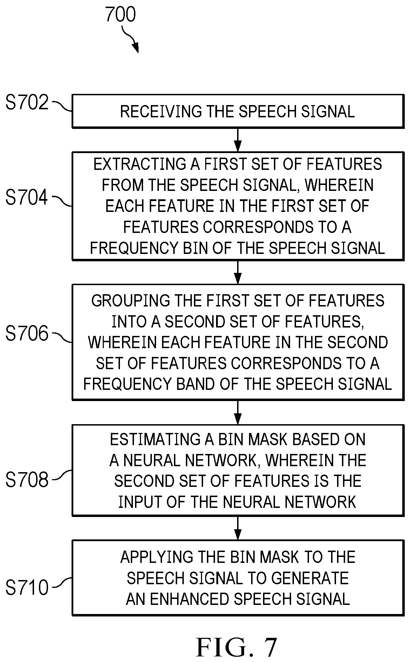

**Fig. 7** is a flowchart of an example of a process 700 of using a neural network for speech enhancement according to embodiments of the disclosure. Process 700 may correspond to the steps performed according to training of the speech enhancement framework in **Fig. 6****.** In some implementations, blocks of process 700 may be performed by a playback device. Alternatively, blocks of process 700 may be performed by another device, and the enhanced speech signal may be provided to the playback device.

In S702, process 700 may receive a speech signal. The speech signal may be degraded by any one of noise, reverberation and compression.

In S704, process 700 may extract a first set of features from the speech signal, wherein each feature in the first set of features corresponds to a frequency bin of the speech signal. To extract the features, the speech signal may have to be transformed into the frequency domain. The features in the first set of features correspond to the complex spectrum values of a corresponding frequency bin for the speech signal.

In S706, process 700 may group the first set of features into a second set of features, wherein each feature in the second set of features corresponds to a frequency band of the speech signal. Grouping the first set of features into a second set of features may correspond to calculating a value for each frequency band based on the values of the frequency bins in each band. The calculation of the frequency band value may involve calculating a mean amplitude value of the frequency bins inside of the respective frequency band.

In S708, process 700 may estimate a bin mask based on a neural network, wherein the second set of features is the input of the neural network. Estimating the bin mask may involve an estimation of a band mask, i.e., a mask comprising values for each frequency band, and an upscaling of the estimated band mask to the bin mask by the neural network. The neural network may be a trained neural network and more particularly a trained DNN. The neural network may be trained based on pairs of clean and degraded speech.

In S710, process 700 may apply the bin mask to the speech signal to generate an enhanced speech signal. Applying the bin mask to the speech signal may include multiplying each value of the bin mask with a corresponding value in the first set of features to generate enhanced bin features. Generating the enhanced speech signal may further include the application of an inverse frequency transform to the enhanced bin features to generate an enhanced version of the speech signal in time domain.

### Hybrid Loss Function for Training of a Speech Enhancing Neural Network

**Fig. 8** depicts another example framework 800 for training a neural network for speech enhancement according to some embodiments.

The training of the neural network is based on a pair of a clean/reference speech signal and a degraded speech signal. The degraded speech signal may be generated based on the reference speech signal. The generation of the degraded speech signal may be analogous to the generation of degraded speech in framework 100. For details of the generation of the degraded speech it is referred to the embodiment corresponding to **Fig. 1****.**

Both the reference speech and the corresponding degraded speech are then each processed by a feature extraction module 801. Reference speech and the corresponding degraded speech may be processed sequentially by the same extraction module 801 or may be processed by the same or a different extraction module 801 in parallel. Both speech signals may be processed on a frame-by-frame basis, i.e., framework 800 may operate on a single frame of the input audio signals. The extraction module 801 processes the input audio signal to determine a feature for each frequency block of the input audio signal. A frequency block may be a frequency bin, a frequency band or any other suitable segmentation of the frequency spectrum. For details concerning bin features and band features it is again referred to the embodiment corresponding to **Fig. 1****.**

To determine the features for both speech signals, the signals may have to be transformed into the frequency domain. Any suitable discrete frequency transform (Fourier transform, Wavelet transform, etc.,) may be employed. Advantageous examples comprise a short time Fourier transform, SFTF, a modified discrete cosine transform, MDCT, a shifted discrete frequency transform, MDXT, and a filter bank transform. A reason for using MDXT instead of MDCT or DFT is that it provides both the energy compaction property of the MDCT and the phase information similar to DFT.

In a next step the determined band features are input to a neural network. The neural network may advantageously be a DNN. The DNN may be any suitable DNN for mask-based speech enhancement. Examples for suitable DNNs are depicted in **Figs. 2** and **3****.** For details concerning the DNNs of **Figs. 2** and **3** it is again referred to the embodiment corresponding to **Fig. 1****.** The choice of the DNN may depend on the type of input features, i.e., the frequency block size for each feature.

Neural network 803 outputs a mask, which is the input of enhancement module 804. The mask may include a value for each frequency block of the speech signal with degradations. The value may be a ratio of speech to speech plus noise. In this context, noise is understood as any degradation that adversely affects the speech signal, and speech is understood as the speech signal without these degradations. The ratio may be calculated by considering the power of the speech signal and the noise signal. Therefore, the value of the ratio will be 1, if there is no noise in the speech input signal, and will approach 0, when there is almost no speech, but many degradations in the input speech signal.

Additionally, a second input to enhancement module 804 are features corresponding to the speech signal with degradations. The mask is then applied to the features to generate enhanced features. Applying the mask to the features may include the multiplication of each value of the mask with each corresponding feature. The feature may be the complex values of each frequency block. The enhanced features may therefore also correspond to complex values of each frequency block.

As the aim of the speech enhancement framework is an output speech signal as close as possible to the reference/clean speech signal, in a final step the enhanced features output by enhancement module 804, and the features of the reference/clean speech signal have to be compared. The comparison is performed by a hybrid loss function 805.

Classic loss functions based on the MSE may not adequately penalize over-suppression of the degraded speech signal. To mitigate over-suppression of the neural network-based speech enhancement framework, a perceptual relevant cost function has been proposed in PCT

Publication No. WO 2023/278398. The idea of the perceptual loss function is to use a non-linear function with an asymmetric penalty for over-suppression or under-suppression. If the difference between the enhanced features and the features of the reference speech signal indicates that there would be an over-suppression event, the loss function will set more penalty weight for this situation.

The proposed perceptual loss function operates on the magnitude spectrum domain and does not consider the complex domain knowledge. To not only consider the magnitude but also the argument of the complex spectrum values, a hybrid loss function is used for evaluating the performance of the speech enhancement. The hybrid loss function combines the perceptual loss function in the magnitude spectrum domain with an MSE in the complex spectrum domain.

According to the invention defined by appended independent claim 13, the hybrid loss function is defined as follows: $Loss = {Loss}_{m} + β ∗ {Loss}_{c}$ ${Loss}_{m} = {m}^{diff} - diff - 1$ $diff = {\left|S\right|}^{p} - {\left|\hat{S}\right|}^{p}$ ${Loss}_{c} = {\left|{\left|S\right|}^{p}{e}^{jφ \left(S\right)}-{\left|\hat{S}\right|}^{p}{e}^{jφ \left(\hat{S}\right)}\right|}^{2}$

Where *Lossₘ* is the perceptual loss function in the magnitude spectrum domain, *Loss_{c}* is the MSE loss function in the complex spectrum domain, *β* is the weighting coefficient between the magnitude spectrum domain loss and the complex spectrum domain loss, m is the tuning parameter that controls the shape of the asymmetric penalty, *S* and *Ŝ* are the reference (i.e., clean) spectrum and the estimated spectrum, respectively, *p* is a spectral compression factor, and operator *φ* calculates the argument of a complex number. For example, *β* may be in the range of 0.8 to 1.2, *m* may be in the range of 2.73 to 2.75, and *p* may be in the range of 0.3 to 0.35.

Based on the experimental evaluations of the speech enhancement training/inference with the band-to-bin LensNet according to **Fig. 3****,** the hybrid loss function shows better perceptual quality than the perceptual loss function alone. In other words, when the band-to-bin structure of **Fig. 1** is used in the framework of **Fig. 8****,** the performance can be further improved by using the hybrid loss function. The hybrid loss function may however also be used together with different configurations.

The result of the hybrid loss function will be evaluated. Evaluation may be performed on the result of the hybrid loss function over multiple pairs of reference/clean speech and degraded speech and over multiple frames of the respective pairs. The pairs should ideally capture a large variety of speech, e.g., gender, age etc., and a large variety of degradations for each clean speech sample. In other words, for each sample of clean speech, multiple samples of degradations of this specific speech sample may be provided.

Depending on the evaluation result, parameters of the neural network may be updated. Updating the parameters may include updating of weights in the neural network. The neural network may be trained until the result of the hybrid loss function reaches a threshold or until the result of the hybrid loss function does not decrease substantially anymore.

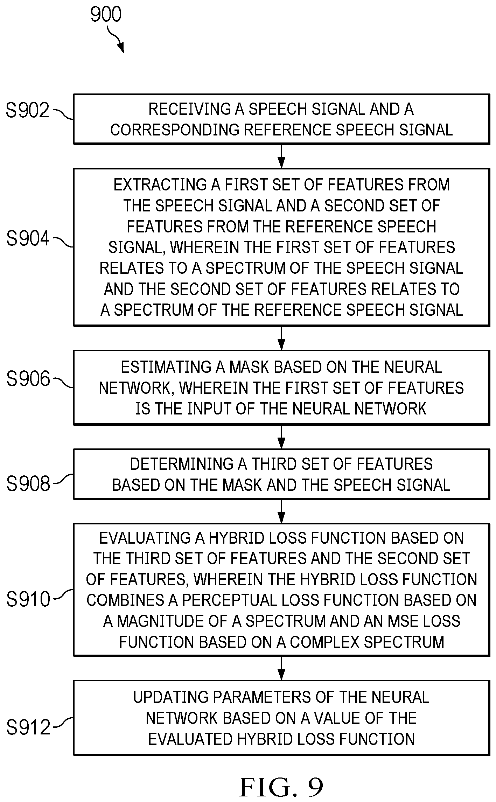

**Fig. 9** is a flowchart of an example of a process 900 of training a neural network for speech enhancement according to embodiments of the disclosure. Process 900 may correspond to the steps performed according to training of the speech enhancement framework in **Fig. 8****.** In some implementations, blocks of process 900 may be performed by a speech enhancement device. Alternatively, blocks of process 900 may be performed by another device, and the parameters for the trained neural network are provided to the speech enhancement device.

In S902, process 900 may receive a speech signal and a corresponding reference speech signal. The speech signal may be generated from the reference speech signal by degrading the speech signal.

In S904, process 900 may extract a first set of features from the speech signal and a second set of features from the reference speech signal, wherein the first set of features relates to a spectrum of the speech signal and the second set of features relates to a spectrum of the reference speech signal. To extract the features, the speech signal and the reference signal may have to be transformed into the frequency domain. The features in the first set of features and in the second set of features may correspond to the complex spectrum values of a corresponding frequency block for the speech signal and the reference speech signal, respectively. The frequency block may be a frequency bin or a frequency band.

In S906, process 900 may estimate a mask based on the neural network, wherein the first set of features is the input of the neural network. Estimating the mask may involve an estimation of a mask with values corresponding to each frequency block.

In S908, process 900 may determine a third set of features based on the mask and the speech signal. Determining the third set of features may comprise applying the mask to the speech signal. The third set of features may be an enhanced version of the first set of features. Applying the mask to the speech signal may include multiplying each value of the mask with a corresponding value in the first set of features.

In S910, process 900 may evaluate a hybrid loss function based on the third set of features and the second set of features, wherein the hybrid loss function combines a perceptual loss function based on a magnitude of a spectrum and an MSE loss function based on a complex spectrum. Evaluating the hybrid loss function may include calculating a result of the hybrid loss function over multiple frames of speech and reference speech pairs and over multiple speech and reference speech pairs.

In S912, process 900 may update parameters of the neural network based on a value of the evaluated hybrid loss function. The parameters may be weights of the neural network. The updating of the parameters may be based on preceding results of the hybrid loss function. In particular, the updating of parameters may be based on a trend of preceding results of the hybrid loss function.

### Interpretation

A computing device implementing the techniques described above can have the following example architecture. Other architectures are possible, including architectures with more or fewer components. In some implementations, the example architecture includes one or more processors (e.g., dual-core Intel^{®} Xeon^{®} Processors), one or more output devices (e.g., LCD), one or more network interfaces, one or more input devices (e.g., mouse, keyboard, touch-sensitive display) and one or more computer-readable mediums (e.g., RAM, ROM, SDRAM, hard disk, optical disk, flash memory, etc.). These components can exchange communications and data over one or more communication channels (e.g., buses), which can utilize various hardware and software for facilitating the transfer of data and control signals between components.

The term "computer-readable medium" refers to a medium that participates in providing instructions to processor for execution, including without limitation, non-volatile media (e.g., optical or magnetic disks), volatile media (e.g., memory) and transmission media. Transmission media includes, without limitation, coaxial cables, copper wire and fiber optics.

Computer-readable medium can further include operating system (e.g., a Linux^{®} operating system), network communication module, audio interface manager, audio processing manager and live content distributor. Operating system can be multi-user, multiprocessing, multitasking, multithreading, real time, etc. Operating system performs basic tasks, including but not limited to: recognizing input from and providing output to network interfaces and/or devices; keeping track and managing files and directories on computer-readable mediums (e.g., memory or a storage device); controlling peripheral devices; and managing traffic on the one or more communication channels. Network communications module includes various components for establishing and maintaining network connections (e.g., software for implementing communication protocols, such as TCP/IP, HTTP, etc.).

Architecture can be implemented in a parallel processing or peer-to-peer infrastructure or on a single device with one or more processors. Software can include multiple software components or can be a single body of code.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, a browser-based web application, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor or a retina display device for displaying information to the user. The computer can have a touch surface input device (e.g., a touch screen) or a keyboard and a pointing device such as a mouse or a trackball by which the user can provide input to the computer. The computer can have a voice input device for receiving voice commands from the user.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

A system of one or more computers can be configured to perform particular actions by virtue of having software, firmware, hardware, or a combination of them installed on the system that in operation causes or cause the system to perform the actions. One or more computer programs can be configured to perform particular actions by virtue of including instructions that, when executed by data processing apparatus, cause the apparatus to perform the actions.

This specification contains many specific implementation details to be construed as descriptions of features specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Unless specifically stated otherwise, as apparent from the following discussions, it is appreciated that throughout the present invention discussions utilizing terms such as "processing", "computing", "calculating", "determining", "analyzing" or the like, refer to the action and/or processes of a computer or computing system, or similar electronic computing devices, that manipulate and/or transform data represented as physical, such as electronic, quantities into other data similarly represented as physical quantities.

Reference throughout this description to "one example embodiment", "some example embodiments" or "an example embodiment" means that a particular feature, structure or characteristic described in connection with the example embodiment is included in at least one example embodiment.

Thus, appearances of the phrases "in one example embodiment", "in some example embodiments" or "in an example embodiment" in various places throughout this description are not necessarily all referring to the same example embodiment. Furthermore, the particular features, structures or characteristics may be combined in any suitable manner, as would be apparent to one of ordinary skill in the art, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

Also, it is to be understood that the phraseology and terminology used herein are for the purpose of description and should not be regarded as limiting. The use of "including," "comprising," or "having" and variations thereof in this description are meant to encompass the items listed thereafter and equivalents thereof as well as additional items. Unless specified or limited otherwise, the terms "mounted", "connected", "supported", and "coupled" and variations thereof are used broadly and encompass both direct and indirect mountings, connections, supports, and couplings.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

## Claims

1. A neural network-based method for speech enhancement of a speech signal, the method comprising:
receiving the speech signal;
extracting a first set of features from the speech signal, wherein each feature in the first set of features corresponds to a frequency bin of the speech signal;
grouping the first set of features into a second set of features, wherein each feature in the second set of features corresponds to a frequency band of the speech signal;
estimating a bin mask based on a deep neural network, DNN, wherein the second set of features is the input of the neural network; and
applying the bin mask to the speech signal to generate an enhanced speech signal,
wherein the DNN comprises an up-sampling module for estimating the bin mask and wherein the DNN estimates a band mask based on the second set of features and estimates the bin mask based on the band mask and the up-sampling module.

2. The method of claim 1, wherein extracting the first set of features from the speech signal comprises:
transforming the speech signal into the frequency domain to obtain a transformed speech signal; and
extracting a feature from the transformed speech signal for each frequency bin in the frequency domain to obtain the first set of features.

3. The method of any one of the preceding claims, wherein grouping the first set of features into the second set of features comprises:
for each frequency band of the speech signal, combining features of the first set of features corresponding to frequency bins inside the frequency band to obtain the second set of features, wherein combining features of the first set of features corresponding to frequency bins inside the frequency band to obtain the second set of features comprises weighting the features of the first set of features corresponding to frequency bins inside the frequency band.

4. The method of any one of claims 1 to 3, wherein each feature in the second set of features corresponds to any one of a Mel-frequency band power, Bark Scale band power, log-frequency band power or equivalent rectangular bandwidth, ERB, band power.

5. The method of any one of the preceding claims, wherein the bin mask comprises a value indicating an amount of speech present in each frequency bin of the speech signal, wherein the value indicating an amount of speech present in each frequency bin of the speech signal is a ratio of speech to speech plus noise.

6. The method of any of claims 1 to 5, wherein the up-sampling module comprises at least a first module comprising an up-sample CNN layer, followed by a batch norm layer, followed by an activation layer, wherein the up-sample CNN layer is a transposed CNN layer.

7. The method of claim 6, wherein the up-sampling module comprises a plurality of consecutive first modules, wherein a quantity of the consecutive first modules depends on the ratio of a number of the frequency bins to a number of the frequency bands.

8. The method of any of claims 1 to 7, wherein the DNN further comprises a feature extraction module, followed by an encoder module, followed by a decoder module, and a CNN layer, wherein the decoder module is followed by the up-sampling module, which is followed by the CNN layer, wherein the encoder module comprises at least one down-sample layer and a plurality of CNN layers, and wherein the decoder module comprises at least one up-sample layer and a plurality of CNN layers.

9. A method of training a neural network for speech enhancement of a speech signal, the method comprising:
receiving a speech signal and a corresponding reference speech signal;
extracting a first set of features from the speech signal and a third set of features from the reference speech signal, wherein each feature in the first set of features corresponds to a frequency bin of the speech signal and each feature in the third set of features corresponds to a frequency bin of the reference speech signal;
grouping the first set of features into a second set of features, wherein each feature in the second set of features corresponds to a frequency band of the speech signal;
estimating a bin mask based on a deep neural network, DNN, wherein the second set of features is the input of the neural network;
determining a fourth set of features based on the bin mask and the speech signal,
wherein each feature in the fourth set of features corresponds to a frequency bin of the speech signal with the bin mask applied;
evaluating a loss function based on the third set of features and the fourth set of features; and
updating parameters of the neural network based on a value of the evaluated loss function,
wherein the DNN comprises an up-sampling module for estimating the bin mask and wherein the DNN estimates a band mask based on the second set of features and estimates the bin mask based on the band mask and the up-sampling module.

10. The method of claim 9, wherein the loss function is a perceptual loss function, and optionally wherein the perceptual loss function is defined as *Lossₘ = m^{diff}* - *diff* - 1, wherein *diff* = |*S*|*^{p}* - |*Ŝ*|*^{p}*, |*S*| is the amplitude spectrum of the reference speech signal, |*Ŝ*| is the amplitude spectrum of the speech signal after the bin mask has been applied and , *p* is a spectral compression factor, and m is a tuning parameter that controls the shape of an asymmetric penalty for over-suppression or under-suppression.

11. The method of claim 9, wherein the loss function is a MSE loss function, and optionally wherein the MSE loss function is defined as ${Loss}_{c} = {\left|{\left|S\right|}^{p}{e}^{jφ \left(S\right)} - {\left|\hat{S}\right|}^{p}{e}^{jφ \left(\hat{S}\right)}\right|}^{2} ,$ wherein *S* is the spectrum of the reference speech signal, *Ŝ* is the spectrum of the speech signal after the bin mask has been applied, *p* is a spectral compression factor, and operator *φ* calculates the argument of a complex number.

12. The method of claim 9, wherein the loss function is a hybrid loss function being a weighted sum of a perceptual loss function and an MSE loss function, and optionally wherein the hybrid loss function is defined as $Loss = {Loss}_{m} + β * {Loss}_{c} ,$ wherein the perceptual loss function is *Lossₘ = m^{diff} - diff* - 1, the MSE loss function is *Loss_{c}* = ||*S*|*^{p}e*^{*jφ*(*s*)} - |*Ŝ*|*^{p}e*^{*jφ*(}*^{Ŝ}*⁾|², *diff* = |*S*|*^{p}* - |*Ŝ*|*^{p}*,*S* is the spectrum of the reference speech signal, *Ŝ* is the spectrum of the speech signal after the bin mask has been applied, *p* is a spectral compression factor, operator *φ* calculates the argument of a complex number, *β* is a weighting factor, and *m* is a tuning parameter that controls the shape of an asymmetric penalty for over-suppression or under-suppression.

13. A method of training a neural network for speech enhancement of a speech signal, the method comprising:
receiving a speech signal and a corresponding reference speech signal;
extracting a first set of features from the speech signal and a second set of features from the reference speech signal, wherein the first set of features relates to a spectrum of the speech signal and the second set of features relates to a spectrum of the reference speech signal;
estimating a mask based on the neural network, wherein the first set of features is the input of the neural network;
determining a third set of features based on the mask and the speech signal;
evaluating a hybrid loss function based on the third set of features and the second set of features, wherein the hybrid loss function combines a perceptual loss function based on a magnitude of a spectrum and an MSE loss function based on a complex spectrum; and
updating parameters of the neural network based on a value of the evaluated hybrid loss function,
wherein the hybrid loss function is defined as $Loss = {Loss}_{m} + β * {Loss}_{c} ,$ wherein the perceptual loss function is *Lossₘ* = *m^{diff}* - *diff* - 1, the MSE loss function is *Loss_{c}* = ||*S*|*^{p}e*^{*jφ*(*S*)} - |*Ŝ*|*^{p}e*^{*jφ*(}*^{Ŝ}*⁾|², *diff* = |*S*|*^{p}* - |*Ŝ*|*^{p}*,*S* is the spectrum of the reference speech signal, *Ŝ* is the spectrum of the speech signal after the bin mask has been applied, *p* is a spectral compression factor, operator *φ* calculates the argument of a complex number, *β* is a weighting factor, and *m* is a tuning parameter that controls the shape of an asymmetric penalty for over-suppression or under-suppression.

14. An apparatus, comprising a processor and a memory coupled to the processor, wherein the processor is adapted to carry out the method according to any one of claims 1 to 13.

15. A program comprising instructions that, when executed by a processor, cause the processor to carry out the method according to any one of claims 1 to 13.

## Patentansprüche

1. Auf einem neuronalen Netzwerk basierendes Verfahren zur Sprachverbesserung eines Sprachsignals, wobei das Verfahren Folgendes umfasst:
Empfangen des Sprachsignals;
Extrahieren eines ersten Satzes von Merkmalen aus dem Sprachsignal, wobei jedes Merkmal im ersten Satz von Merkmalen einem Frequenzkanal des Sprachsignals entspricht;
Gruppieren des ersten Satzes von Merkmalen in einen zweiten Satz von Merkmalen, wobei jedes Merkmal in dem zweiten Satz von Merkmalen einem Frequenzband des Sprachsignals entspricht;
Schätzen einer Kanalmaske auf Grundlage eines tiefen neuronalen Netzwerks, DNN, wobei der zweite Satz von Merkmalen die Eingabe des neuronalen Netzwerks ist; und
Anwenden der Kanalmaske auf das Sprachsignal zum Erzeugen eines verbesserten Sprachsignals, wobei das DNN ein Upsampling-Modul zum Schätzen der Kanalmaske umfasst und wobei das DNN eine Bandmaske auf Grundlage des zweiten Satzes von Merkmalen schätzt und die Kanalmaske auf Grundlage der Bandmaske und des Upsampling-Moduls schätzt.

2. Verfahren nach Anspruch 1, wobei Extrahieren des ersten Satzes von Merkmalen aus dem Sprachsignal Folgendes umfasst:
Transformieren des Sprachsignals in den Frequenzbereich, um ein transformiertes Sprachsignal zu erhalten; und
Extrahieren eines Merkmals aus dem transformierten Sprachsignal für jeden Frequenzkanal im Frequenzbereich, um den ersten Satz von Merkmalen zu erhalten.

3. Verfahren nach einem der vorstehenden Ansprüche, wobei Gruppieren der ersten Satzes von Merkmalen in den zweiten Satz von Merkmalen Folgendes umfasst:
für jedes Frequenzband des Sprachsignals Kombinieren von Merkmalen des ersten Satzes von Merkmalen, die Frequenzkanälen innerhalb des Frequenzbandes entsprechen, um den zweiten Satz von Merkmalen zu erhalten, wobei Kombinieren der Merkmale des ersten Satzes von Merkmalen, die den Frequenzkanälen innerhalb des Frequenzbandes entsprechen, um den zweiten Satz von Merkmalen zu erhalten, Gewichten der Merkmale des ersten Satzes von Merkmalen, die den Frequenzkanälen innerhalb des Frequenzbandes entsprechen, umfasst.

4. Verfahren nach einem der Ansprüche 1 bis 3, wobei jedes Merkmal im zweiten Satz von Merkmalen einer Mel-Frequenzbandleistung, einer Bark-Scale-Bandleistung, einer Log-Frequenzbandleistung oder einer äquivalenten Rechteckbandleistung, ERB, entspricht.

5. Verfahren nach einem der vorstehenden Ansprüche, wobei die Kanalmaske einen Wert umfasst, der einen Anteil von Sprache angibt, der in jedem Frequenzkanal des Sprachsignals vorhanden ist, wobei der Wert, der einen Anteil von Sprache angibt, der in jedem Frequenzkanal des Sprachsignals vorhanden ist, ein Verhältnis von Sprache zu Sprache plus Rauschen ist.

6. Verfahren nach einem der Ansprüche 1 bis 5, wobei das Upsampling-Modul mindestens ein erstes Modul umfasst, das eine Upsampling-CNN-Schicht, gefolgt von einer Batch-Normalisierungsschicht, gefolgt von einer Aktivierungsschicht, umfasst, wobei die Upsampling-CNN-Schicht eine transponierte CNN-Schicht ist.

7. Verfahren nach Anspruch 6, wobei das Upsampling-Modul eine Vielzahl von aufeinanderfolgenden ersten Modulen umfasst, wobei eine Menge der aufeinanderfolgenden ersten Module vom Verhältnis einer Anzahl der Frequenzkanäle zu einer Anzahl der Frequenzbänder abhängt.

8. Verfahren nach einem der Ansprüche 1 bis 7, wobei das DNN weiter ein Merkmalsextraktionsmodul, gefolgt von einem Encodermodul, gefolgt von einem Decodermodul, und eine CNN-Schicht umfasst, wobei auf das Decodermodul das Upsampling-Modul folgt, auf welches die CNN-Schicht folgt, wobei das Encodermodul mindestens eine Downsampling-Schicht und eine Vielzahl von CNN-Schichten umfasst und wobei das Decodermodul mindestens eine Upsampling-Schicht und eine Vielzahl von CNN-Schichten umfasst.

9. Verfahren zum Trainieren eines neuronalen Netzwerks zur Sprachverbesserung eines Sprachsignals, wobei das Verfahren Folgendes umfasst:
Empfangen eines Sprachsignals und eines entsprechenden Referenzsprachsignals;
Extrahieren eines ersten Satzes von Merkmalen aus dem Sprachsignal und eines dritten Satzes von Merkmalen aus dem Referenzsprachsignal, wobei jedes Merkmal im ersten Satz von Merkmalen einem Frequenzkanal des Sprachsignals entspricht und jedes Merkmal im dritten Satz von Merkmalen einem Frequenzkanal des Referenzsprachsignals entspricht;
Gruppieren des ersten Satzes von Merkmalen in einen zweiten Satz von Merkmalen, wobei jedes Merkmal in dem zweiten Satz von Merkmalen einem Frequenzband des Sprachsignals entspricht;
Schätzen einer Kanalmaske auf Grundlage eines tiefen neuronalen Netzwerks, DNN, wobei der zweite Satz von Merkmalen die Eingabe des neuronalen Netzwerks ist;
Ermitteln eines vierten Satzes von Merkmalen auf Grundlage der Kanalmaske und des Sprachsignals, wobei jedes Merkmal in dem vierten Satz von Merkmalen einem Frequenzkanal des Sprachsignals mit der angewendeten Kanalmaske entspricht;
Bewerten einer Verlustfunktion auf Grundlage des dritten Satzes von Merkmalen und des vierten Satzes von Merkmalen; und
Aktualisieren von Parametern des neuronalen Netzwerks auf Grundlage eines Wertes der bewerteten Verlustfunktion,
wobei das DNN ein Upsampling-Modul zum Schätzen der Kanalmaske umfasst und wobei das DNN eine Bandmaske auf Grundlage des zweiten Satzes von Merkmalen schätzt und die Kanalmaske auf Grundlage der Bandmaske und des Upsampling-Moduls schätzt.

10. Verfahren nach Anspruch 9, wobei die Verlustfunktion eine perzeptuelle Verlustfunktion ist, und wahlweise, wobei die perzeptuelle Verlustfunktion als *Lossₘ* = *m^{diff}* - *diff -* 1 definiert ist, wobei *diff =* |*S*|*^{p}* - |*Ŝ*|*^{p}*, |*S*| das Amplitudenspektrum des Referenzsprachsignals ist, |*Ŝ*| das Amplitudenspektrum des Sprachsignals ist, nachdem die Kanalmaske angewendet worden ist, und *p* ein spektraler Kompressionsfaktor ist, und m ein Abstimmungsparameter ist, der die Form einer asymmetrischen Strafe für Überdämpfung oder Unterdämpfung steuert.

11. Verfahren nach Anspruch 9, wobei die Verlustfunktion eine MSE-Verlustfunktion ist, und wahlweise, wobei die MSE-Verlustfunktion definiert ist als
${Loss}_{c} = {\left|{\left|S\right|}^{p}{e}^{j φ \left(S\right)} - {\left|\hat{S}\right|}^{p}{e}^{j φ \left(\hat{S}\right)}\right|}^{2} ,$wobei S das Spektrum des Referenzsprachsignals ist, *Ŝ* das Spektrum des Sprachsignals ist, nachdem die Kanalmaske angewendet worden ist, *p* ein spektraler Kompressionsfaktor ist und der Operator *φ* das Argument einer komplexen Zahl berechnet.

12. Verfahren nach Anspruch 9, wobei die Verlustfunktion eine hybride Verlustfunktion ist, die eine gewichtete Summe einer perzeptuellen Verlustfunktion und einer MSE-Verlustfunktion ist, und wahlweise, wobei die hybride Verlustfunktion als *Loss = Lossₘ + β * Loss_{c}* definiert ist, wobei die perzeptuelle Verlustfunktion *Lossₘ* = *m^{diff}* - *diff* - 1 ist, die MSE-Verlustfunktion *Loss_{c} =* ∥*S*|*^{p}e*^{*jφ*(*S*)} - |*Ŝ*|*^{p}e*^{*jφ*(}*^{Ŝ}*⁾|²*, diff =* |*S*|*^{p}* - |*S*|*^{p}* ist, S das Spektrum des Referenzsprachsignals ist, *Ŝ* das Spektrum des Sprachsignals ist, nachdem die Kanalmaske angewendet worden ist, *p* ein spektraler Kompressionsfaktor ist, der Operator *φ* das Argument einer komplexen Zahl berechnet, *β* ein Gewichtungsfaktor ist und m ein Abstimmungsparameter ist, der die Form einer asymmetrischen Strafe für Überdämpfung oder Unterdämpfung steuert.

13. Verfahren zum Trainieren eines neuronalen Netzwerks zur Sprachverbesserung eines Sprachsignals, wobei das Verfahren Folgendes umfasst:
Empfangen eines Sprachsignals und eines entsprechenden Referenzsprachsignals;
Extrahieren eines ersten Satzes von Merkmalen aus dem Sprachsignal und eines zweiten Satzes von Merkmalen aus dem Referenzsprachsignal, wobei sich der erste Satz von Merkmalen auf ein Spektrum des Sprachsignals bezieht und sich der zweite Satz von Merkmalen auf ein Spektrum des Referenzsprachsignals bezieht;
Schätzen einer Maske auf Grundlage des neuronalen Netzwerks, wobei der erste Satz von Merkmalen die Eingabe des neuronalen Netzwerks ist;
Ermitteln eines dritten Satzes von Merkmalen auf Grundlage der Maske und des Sprachsignals;
Bewerten einer hybriden Verlustfunktion auf Grundlage des dritten Satzes von Merkmalen und des zweiten Satzes von Merkmalen, wobei die hybride Verlustfunktion eine perzeptuelle Verlustfunktion auf Grundlage einer Amplitude eines Spektrums und eine MSE-Verlustfunktion auf Grundlage eines komplexen Spektrums kombiniert; und
Aktualisieren von Parametern des neuronalen Netzwerks auf Grundlage eines Wertes der bewerteten hybriden Verlustfunktion,
wobei die hybride Verlustfunktion als *Loss = Lossₘ + β * Loss_{c},* definiert ist, wobei die perzeptuelle Verlustfunktion *Lossₘ* = *m^{diff}* - *diff -* 1, ist, die MSE-Verlustfunktion *Loss_{c} =* ∥*S*|*^{p}e^{ĵ}*^{(*S*)} - |*Ŝ*|*^{p}e*^{*jφ*(*S*)}|²*diff* = |*S*|*^{p}* - *Ŝ*|*^{p}* ist, S das Spektrum des Referenzsprachsignals ist, *Ŝ* das Spektrum des Sprachsignals ist, nachdem die Kanalmaske angewendet worden ist, *p* ein spektraler Kompressionsfaktor ist, der Operator *φ* das Argument einer komplexen Zahl berechnet, *β* ein Gewichtungsfaktor ist und m ein Abstimmungsparameter ist, der die Form einer asymmetrischen Strafe für Überdämpfung oder Unterunterdrückung steuert.

14. Einrichtung, die einen Prozessor und einen Speicher, der an den Prozessor gekoppelt ist, umfasst, wobei der Prozessor angepasst ist, das Verfahren nach einem der Ansprüche 1 bis 13 auszuführen.

15. Programm, das Anweisungen umfasst, die, wenn sie von einem Prozessor ausgeführt werden, den Prozessor veranlassen, das Verfahren nach einem der Ansprüche 1 bis 13 auszuführen.

## Revendications

1. Procédé basé sur réseau neuronal pour l'amélioration de la parole d'un signal de parole, le procédé comprenant :
la réception du signal de parole ;
l'extraction d'un premier ensemble de caractéristiques du signal de parole, dans lequel chaque caractéristique du premier ensemble de caractéristiques correspond à un intervalle de fréquence du signal de parole ;
le regroupement du premier ensemble de caractéristiques dans un deuxième ensemble de caractéristiques, dans lequel chaque caractéristique du deuxième ensemble de caractéristiques correspond à une bande de fréquence du signal de parole ;
l'estimation d'un masque d'intervalle sur la base d'un réseau neuronal profond, DNN, dans lequel le deuxième ensemble de caractéristiques est l'entrée du réseau neuronal ; et
l'application du masque d'intervalle au signal de parole pour générer un signal de parole amélioré, dans lequel le DNN comprend un module de suréchantillonnage pour estimer le masque d'intervalle et dans lequel le DNN estime un masque de bande sur la base du deuxième ensemble de caractéristiques et estime le masque d'intervalle sur la base du masque de bande et du module de suréchantillonnage.

2. Procédé selon la revendication 1, dans lequel l'extraction du premier ensemble de caractéristiques du signal de parole comprend :
la transformation du signal de parole dans le domaine fréquentiel pour obtenir un signal de parole transformé ; et
l'extraction d'une caractéristique du signal de parole transformé pour chaque intervalle de fréquence dans le domaine fréquentiel afin d'obtenir le premier ensemble de caractéristiques.

3. Procédé selon l'une quelconque des revendications précédentes, dans lequel le regroupement du premier ensemble de caractéristiques dans le deuxième ensemble de caractéristiques comprend :
pour chaque bande de fréquence du signal de parole, la combinaison de caractéristiques du premier ensemble de caractéristiques correspondant à des intervalles de fréquence à l'intérieur de la bande de fréquence pour obtenir le deuxième ensemble de caractéristiques, dans lequel la combinaison de caractéristiques du premier ensemble de caractéristiques correspondant à des intervalles de fréquence à l'intérieur de la bande de fréquence pour obtenir le deuxième ensemble de caractéristiques comprend la pondération des caractéristiques du premier ensemble de caractéristiques correspondant aux intervalles de fréquence à l'intérieur de la bande de fréquence.

4. Procédé selon l'une quelconque des revendications 1 à 3, dans lequel chaque caractéristique du deuxième ensemble de caractéristiques correspond à l'une quelconque parmi une puissance de bande de fréquence Mel, une puissance de bande d'échelle de Bark, une puissance de bande de fréquence logarithmique ou une puissance de bande de largeur de bande rectangulaire équivalente, ERB.

5. Procédé selon l'une quelconque des revendications précédentes, dans lequel le masque d'intervalle comprend une valeur indiquant une quantité de parole présente dans chaque intervalle de fréquence du signal de parole, dans lequel la valeur indiquant une quantité de parole présente dans chaque intervalle de fréquence du signal de parole est un rapport de parole à parole plus bruit.

6. Procédé selon l'une quelconque des revendications 1 à 5, dans lequel le module de suréchantillonnage comprend au moins un premier module comprenant une couche CNN de suréchantillonnage, suivie d'une couche de normalisation par lots, suivie d'une couche d'activation, dans lequel la couche CNN de suréchantillonnage est une couche CNN transposée.

7. Procédé selon la revendication 6, dans lequel le module de suréchantillonnage comprend une pluralité de premiers modules consécutifs, dans lequel une quantité de premiers modules consécutifs dépend du rapport d'un nombre d'intervalles de fréquence à un nombre de bandes de fréquence.

8. Procédé selon l'une quelconque des revendications 1 à 7, dans lequel le DNN comprend en outre un module d'extraction de caractéristiques, suivi d'un module d'encodage, suivi d'un module de décodage et d'une couche CNN, dans lequel le module de décodage est suivi du module de suréchantillonnage, qui est suivi de la couche CNN, dans lequel le module d'encodage comprend au moins une couche de sous-échantillonnage et une pluralité de couches CNN, et dans lequel le module de décodage comprend au moins une couche de suréchantillonnage et une pluralité de couches CNN.

9. Procédé d'entraînement d'un réseau neuronal pour l'amélioration de la parole à partir d'un signal de parole, le procédé comprenant :
la réception d'un signal de parole et d'un signal de parole de référence correspondant ;
l'extraction d'un premier ensemble de caractéristiques du signal de parole et d'un troisième ensemble de caractéristiques du signal de parole de référence, dans lequel chaque caractéristique du premier ensemble de caractéristiques correspond à un intervalle de fréquence du signal de parole et chaque caractéristique du troisième ensemble de caractéristiques correspond à un intervalle de fréquence du signal de parole de référence ;
le regroupement du premier ensemble de caractéristiques dans un deuxième ensemble de caractéristiques, dans lequel chaque caractéristique du deuxième ensemble de caractéristiques correspond à une bande de fréquence du signal de parole ;
l'estimation d'un masque d'intervalle sur la base d'un réseau neuronal profond, DNN, dans lequel le deuxième ensemble de caractéristiques est l'entrée du réseau neuronal ;
la détermination d'un quatrième ensemble de caractéristiques sur la base du masque d'intervalle et du signal de parole, dans lequel chaque caractéristique du quatrième ensemble de caractéristiques correspond à un intervalle de fréquence du signal de parole avec le masque d'intervalle appliqué ;
l'évaluation d'une fonction de perte sur la base du troisième ensemble de caractéristiques et du quatrième ensemble de caractéristiques ; et
la mise à jour de paramètres du réseau neuronal sur la base d'une valeur de la fonction de perte évaluée,
dans lequel le DNN comprend un module de suréchantillonnage pour estimer le masque d'intervalle et dans lequel le DNN estime un masque de bande sur la base du deuxième ensemble de caractéristiques et estime le masque d'intervalle sur la base du masque de bande et du module de suréchantillonnage.

10. Procédé selon la revendication 9, dans lequel la fonction de perte est une fonction de perte perceptive et, éventuellement, dans lequel la fonction de perte perceptive est définie comme *Lossₘ = m^{diff}* - *diff* - 1, dans lequel *diff =* |*S*|*^{p}* - |*Ŝ*|*^{p}*, |*S*| est le spectre d'amplitude du signal de parole de référence, |*S*| est le spectre d'amplitude du signal de parole après application du masque d'intervalle, et *p* est un facteur de compression spectrale, et m est un paramètre de réglage qui commande la forme d'une pénalité asymétrique pour la sur-suppression ou la sous-suppression.

11. Procédé selon la revendication 9, dans lequel la fonction de perte est une fonction de perte MSE, et, éventuellement, dans lequel la fonction de perte MSE est définie comme ${Loss}_{c} = {\left|{\left|S\right|}^{p}{e}^{jφ \left(S\right)}-{\left|\hat{S}\right|}^{p}{e}^{jφ \left(\hat{S}\right)}\right|}^{2} ,$ dans lequel S est le spectre du signal de parole de référence, *Ŝ* est le spectre du signal de parole après application du masque d'intervalle, p est un facteur de compression spectrale et l'opérateur φ calcule l'argument d'un nombre complexe.

12. Procédé selon la revendication 9, dans lequel la fonction de perte est une fonction de perte hybride qui est une somme pondérée d'une fonction de perte perceptive et d'une fonction de perte MSE, et dans lequel, éventuellement, la fonction de perte hybride est définie comme *Loss =* Lossₘ *+ β * Loss_{c},* dans lequel la fonction de perte perceptive est *Lossₘ* = *m^{diff}* - *diff -* 1, la fonction de perte MSE est *Loss_{c} =* ∥*S*|*^{p}e*^{*jφ*(*S*)} - |*Ŝ*|*^{p}e*^{*jφ*(}*^{Ŝ}*⁾|², *diff =* |*S*|*^{p}* - |*Ŝ*|*^{p}*, S est le spectre du signal de parole de référence, *Ŝ* est le spectre du signal de parole après application du masque d'intervalle, *p* est un facteur de compression spectrale, l'opérateur *φ* calcule l'argument d'un nombre complexe, *β* est un facteur de pondération et m est un paramètre de réglage qui commande la forme d'une pénalité asymétrique pour la sur-suppression ou la sous-suppression.

13. Procédé d'entraînement d'un réseau neuronal pour l'amélioration de la parole à partir d'un signal de parole, le procédé comprenant :
la réception d'un signal de parole et d'un signal de parole de référence correspondant ;
l'extraction d'un premier ensemble de caractéristiques du signal de parole et d'un deuxième ensemble de caractéristiques du signal de parole de référence, dans lequel le premier ensemble de caractéristiques se rapporte à un spectre du signal de parole et le deuxième ensemble de caractéristiques se rapporte à un spectre du signal de parole de référence ;
l'estimation d'un masque sur la base du réseau neuronal, dans lequel le premier ensemble de caractéristiques est l'entrée du réseau neuronal ;
la détermination d'un troisième ensemble de caractéristiques sur la base du masque et du signal de parole ;
l'évaluation d'une fonction de perte hybride sur la base du troisième ensemble de caractéristiques et du deuxième ensemble de caractéristiques, dans lequel la fonction de perte hybride combine une fonction de perte perceptive sur la base de l'amplitude d'un spectre et d'une fonction de perte MSE sur la base d'un spectre complexe ; et
la mise à jour de paramètres du réseau neuronal sur la base d'une valeur de la fonction de perte hybride évaluée,
dans lequel la fonction de perte hybride est définie comme *Loss = Lossₘ + β * Loss_{c},* , dans lequel la fonction de perte perceptive est *Lossₘ* = *m^{diff}* - *diff -* 1,, la fonction de perte MSE est *Loss_{c} =* ∥*S*|*^{p}ₑ*^{*jφ*(*S*)} - |*Ŝ*|*^{p}e*^{*jφ*(}*^{Ŝ}*⁾|²*diff =* |*S*|*^{p}* - |*Ŝ*|*^{p}*, S est le spectre du signal de parole de référence, *Ŝ* est le spectre du signal de parole après l'application du masque d'intervalle, *p* est un facteur de compression spectrale, l'opérateur *φ* calcule l'argument d'un nombre complexe, *β* est un facteur de pondération et m est un paramètre de réglage qui commande la forme d'une pénalité asymétrique pour la sur-suppression ou la sous-suppression.

14. Appareil comprenant un processeur et une mémoire couplée au processeur, dans lequel le processeur est adapté pour réaliser le procédé selon l'une quelconque des revendications 1 à 13.

15. Programme comprenant des instructions qui, lorsqu'elles sont exécutées par un processeur, amènent le processeur à réaliser le procédé selon l'une quelconque des revendications 1 à 13.
